# EUROPEAN PATENT SPECIFICATION

(11) **EP 0 587 219 B1**
(45) Date of publication and mention of the grant of the patent: **12.02.1997**
(21) Application number: 93202459.9
(22) Date of filing: 20.08.1993
(51) Int. Cl.: A01C 23/02

(54) **Soil fertilizing device, and also cutter for same**
Bodendüngervorrichtung und Schneide dafür
Appareil pour enfouir des engrais dans le sol et lame coupante

(30) Priority: 20.08.1992 NL 9201488
(43) Date of publication of application: 16.03.1994
(73) Proprietor: LMC GENNEP B.V., NL-6598 BL Heijen (NL)
(72) Inventor: Hendriks, Petrus Wilhelmus Maria, NL-6598 BL Heyen (NL)
(74) Representative: de Bruijn, Leendert C.

(56) References cited:
- EP-A- 0 056 329
- EP-A- 0 352 865
- US-A- 3 188 988

## Description

The invention relates to a soil fertilizing device, comprising working means for producing a furrow in the ground, and a nozzle which opens out close to the working means, which nozzle is in fluid communication with a tank for slurry, the working means each containing an essentially immovably fixed bar-shaped cutting element with cutting edge which is intended for partial insertion into the ground, which cutting element is fixed in a spring-loaded manner, the cutting element is positioned such that its cutting edge is faced downwards and makes an acute angle with the horizontal, and the cutting element is mounted to the device at one of its longitudinal ends.

Such a device is known from French Patent Specification 1,388,668. This device comprises three essentially fixed bar-shaped vertical cutters which are placed in line next to each other well spaced apart, and the cutting edges of which point in the direction of travel and slope backwards slightly. A fertilizer feeder opens out immediately behind them. Each cutter with the corresponding fertilizer feeder is fixed in a spring-loaded manner to the rear side of a mobile fertilizer tank in such a way that the cutter can swing away on encountering, for example, a stone. For this purpose, use is made of a spring whose ends for fixing to the cutter or the remainder of the device in relation to the direction of travel are situated at a considerable distance from each other, greater than the length of the cutter, viewed in the direction of travel. Due to the fact that in relation to the direction of travel the cutter extends from the connection point with the mobile fertilizer tank, when it is in operation it is, as it were, propelled through the ground.

It has been found in practice that this known device is not so suitable, in particular for fertilizing vegetation, such as grassland. The position of the cutters causes a churning effect when they are moved through the ground, with the result that damage is caused to the vegetation. It has also been found that placing the cutters closer together makes increasing the fertilizer rate per unit width of the known device unworkable. During use, the space between the cutters fills up and causes clogging, which eventually leads to the device becoming jammed.

An attempt was made to achieve an improved soil fertilizing device by replacing the essentially fixed cutters by cutting discs which are rotatable about their central axis, for example as disclosed in EP-B-0,322,941. However, the use of cutting discs increases costs, both as regards the initial purchase of the machine, and as regards the maintenance. Cutting discs solely for working grassland also provide a solution. During the working of, for example, arable land, i.e. land without crops, the same problems occur as in the case of the devices with fixed cutters known from the abovementioned French patent specification. This is attributed to the fact that the cutters in that case rotate little, if at all. It has also been found that the effect of the crop sticking to the cutting disc in certain circumstances leads to that crop being pulled up slightly by the upward moving part of the cutting disc, which causes damage to the crop.

EP-A-O,352,865 also discloses a device with fixed cutters, in which the cutting edge of said cutters slopes upwards in the direction of forward travel, and the cutter extends backwards from the connection point with the remainder of the mobile device. The cutters are fixed to a forward-extending, spring-loaded, relatively long swing arm whose length is greater than the longitudinal measurement of the cutter, in relation to the direction of travel. In operation, therefore, the cutters are pulled. If a cutter encounters a stone or the like, it will swing up out of the ground. This known device has been found unsuitable for use on both grassland and arable land. This is because it is found that the space between the cutters clogs up very quickly on arable land in particular, following which the cutters swing up and no longer function. In fact, this known device is suitable only for working grassland.

US-A-3,188,988 shows a soil fertilising device comprising the features appearing in the pre-amble of claim 1. The known cutting element will tend to bend upwards when any sticking or clogging occurs, which can lead to damage to the vegetation and to undesired stand still.

The object of the invention is to improve the known device with fixed cutters in such a way that less damage is caused to the vegetation, while the cutters can be placed closer together. A further object is to provide a device which is suitable for efficiently working both grassland and arable land without adjustment operations having to be carried out. Another object is to reduce the propulsion power needed for moving the cutter through the ground.

Therefore, the device of the type described in the preamble is characterized in that each cutting element is mounted at its backward end, viewed in the direction of forward movement of the device, and is fixed to the device through an upward extending haft part. Consequently, the cutting edge of this pushed cutter now slopes forwards instead of backwards, in relation to the direction of travel.

It has been found that with the shape of cutter according to the invention considerably less damage is caused to the crop during the working of, for example, grassland. This is attributed to the uninterrupted downward directed force which is exerted by the sloping cutting edge, so that when any sticking occurs it tends to press the crop down rather than push up it up. Moreover, even when cutters are placed close together, no clogging of the spaces between them now occurs. It has been found that the material causing the clogging of said spaces, such as pollen crops, stray dirt etc., is cut through by the cutters. The cutters are able to do this owing to the fact that they form a wedge-shaped space with the ground, so that a scissor-like cutting-off action is produced. The device according to the present invention can be used for both arable land and for crops such as pasture. It was found to work successfully on heavy clay, loess and sand.

According to a preferred embodiment, the cutter is fixed in such a spring-loaded manner that in an essentially unchanged sloping position thereof the cutter can make a relatively large vertical stroke combined with a smaller horizontal stroke against the action of the spring. For this purpose, it is proposed that the places where the spring is in contact with the cutter or the remainder of the device should be selected at a distance of at most the longitudinal dimension of the cutter, in relation to the direction of travel. Those places preferably lie essentially vertically above one another.

The invention is based on the idea that in operation a pushed cutter with a cutting edge which slopes upwards in the direction of travel, depending on the extent of spring-loaded suspension thereof, moves up and down to some extent and in so doing causes a sort of chopping movement. That chopping movement cuts through the material which usually leads to clogging of the space between the cutters. Consequently, the present device is suitable for working all types of land, such as pasture, irrespective of the length of the grass, (un)ploughed arable land, green rye etc., and arable land with sown green manure crop. The chopping movement means that considerably less propulsion power is required for propelling the cutter through the ground. It has been found from practical experiments that approximately 20% less power is now required.

Experiments have demonstrated that the envisaged object is best achieved at an acute angle α of approximately 35°.

It is preferable to fix each cutter so that it is adjustable in height. This means that with one set of cutters the device can be used for working both arable land and vegetation in the best possible manner, it being pointed out that during the working of arable land the cutters are usually inserted considerably more deeply into the ground, so that they can deliver more fertilizer per unit width. In order to be suitable for making the usual furrow depth of max. 8 cm in grassland and approximately 15 cm in arable land, the cutter must be approximately 50 cm long. Without major adjustment operations and while retaining the same cutters, it is therefore possible to use the device to apply the usual 70 to 80 m3 of fertilizer for arable land and 25 to 30 m3 of fertilizer for grassland, while meeting the current standards laid down for ammonia emission.

It is also preferable to fix the cutters in such a way that they are virtually only able to carry out a vertical movement during the chopping action. According to a first embodiment, for this purpose the cutters are each individually fixed by means of a spring element, which spring element is a metal or plastic leaf spring curved into a loop, of which the end connected to the cutter runs essentially horizontally, while the end connected to the remainder of the device essentially forms an acute angle of 60° with the horizontal. The radius of curvature of the loop of the leaf spring preferably increases uniformly from its point of attachment to the cutter. It has been found that with such an attachment of the cutter the sloping position of the cutter hardly changes when there is vertical movement thereof. This means that the cutting effect of the cutter is not adversely affected during the chopping movement.

According to another embodiment, the cutter is accommodated in a vertical guide, and can be moved up and down against the action of a tension/compression spring, for example a helical spring. The vertical guide is formed by, for example, two vertically directed elements which can be moved telescopically relative to each other, such as a bar projecting into a bush, with the helical spring wound around said bar. The bush may be connected to the remainder of the device by means of a hinged rod system, for the purpose of supporting the vertical guide, as will emerge further from the description which follows of the preferred embodiments with reference to the drawings.

For good functioning, it seems important that the sloping position of the cutter should be maintained irrespective of its up and down movement.

Where a forward sloping, but drawn cutter - i.e. where the cutter extends backwards in relation to the usual direction of travel, sloping downwards from the point at which it is fixed to the remainder of the device - is fixed in such a spring-loaded manner that it can be moved up and down, but the sloping position of the cutter remains essentially unchanged during that movement, an improved effect is also achieved compared with, for example, the device known from EP-A-0,352,865. However, the best effect is achieved with a cutter which is pushed.

A suitable cutter for the device according to the invention comprises two bar-shaped or strip-shaped parts with their ends fixed to each other and sloping relative to each other, one of which is the cutting part and contains the cutting edge, while the other is the haft part and is provided with fixing means for fixing to the device. Said two parts preferably slope at an acute angle of approximately 55° relative to each other.

The invention will be explained in greater detail below with reference to examples of embodiments shown in the drawings. In the drawings:
Fig. 1 shows diagrammatically a view in perspective of a part of the device according to the invention, in a first embodiment;
Fig. 2 shows diagrammatically a side view in cross-section of the device shown in Fig. 1;
Fig. 3 shows a detail of the cutter of Fig. 2;
Fig. 4 shows diagrammatically in side view a second embodiment of the invention; and
Fig. 5 shows diagrammatically in side view a third embodiment of the invention.

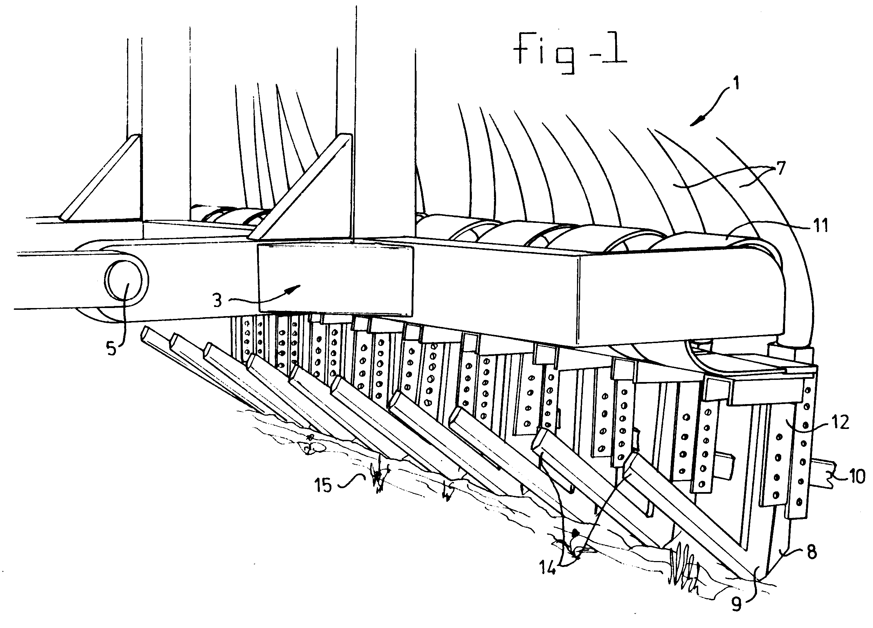

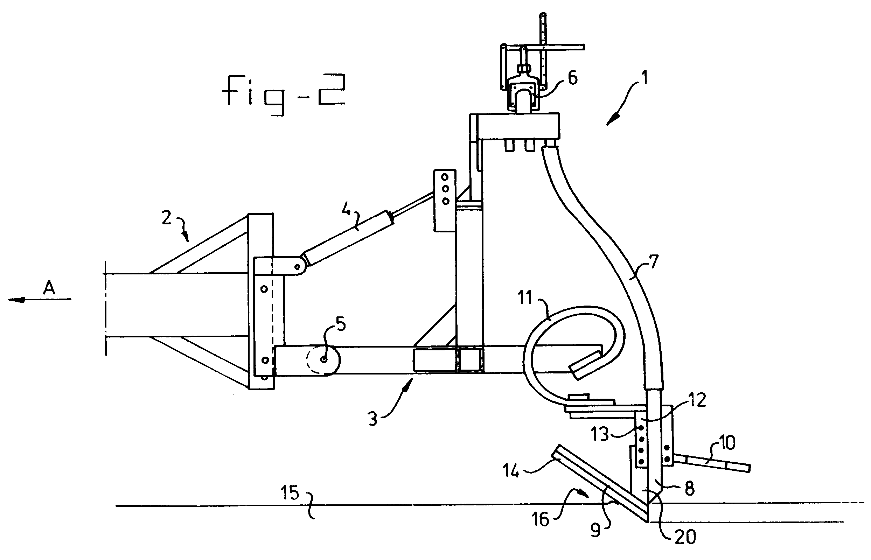

The rear end of a soil fertilizing device 1 is shown with reference to Figs. 1 and 2. With the exception of the cutters and their attachment, this device 1 is comparable to that described and illustrated in FR-B-1,388,688. This rear end comprises a yoke 2 (Fig. 2) which in the drawing is fixed on the left to the mobile underframe (not shown) of a fertilizer tank (not shown). The usual direction of travel is indicated by the arrow A (Fig. 2). A frame 3 is fixed to the yoke 2. Said frame 3 can be swung up and down about hinge point 5 by means of a jack 4. The device 1 is adjusted in this way prior to the working of the ground 15. In the situation shown, the frame 3 is in a horizontal position. On top of said frame 3 is a distributor 6, which is connected to the fertilizer tank (not visible) in a manner not shown. From this distributor a hose 7 in each case runs to a series of delivery nozzles 8 lying in line next to each other, with slight spacing between them. These delivery nozzles 8 are each situated behind a cutter 9. Behind each delivery nozzle is a conventional, and therefore only very schematically shown, furrow coverer 10. Cutter 9 and delivery nozzle 8 are each connected to the frame 3 by means of a separate spring 11. The cutter 9 is adjustable in height relative to the delivery apertures 8. For this purpose, each spring has fixed to it a vertical strip 12, provided with a series of holes 13 arranged in line with one another. The height of the adjustment is achieved by bringing a hole (not visible) disposed in the haft part 20 of the cutter 9 in each case into register with one of said holes 13 and by inserting a pin or bolt into said two holes. The same sort of height adjustment is present for the furrow coverer 10.

As shown, each spring 11 is a leaf spring which is bent in a loop shape. The end of the spring 11 connected to the cutter 9 is essentially in a horizontal position. The end connected to the frame 3 forms an acute angle of approximately 65° with the horizontal. The radius of curvature of the spring 11 increases uniformly from the attachment to the cutter 9. The spring 11 is also in each case bent in such a way that the ends thereof lie essentially vertically above one another. Both ends are made in such a way that they are flat. With this spring 11 a relatively great vertical stroke of the cutter 9 combined with a slight horizontal movement thereof is permitted, while the sloping position of the cutter 9 is essentially retained.

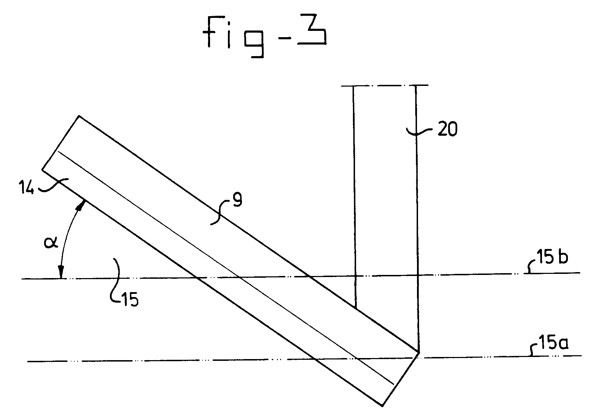

Each cutter 9 has a straight, relatively long cutting edge 14 (Fig. 3), which points towards the ground 15 and forms a wedge-shaped space 16 therewith. The acute angle α which is formed here is approximately 35°. The acute angle formed by the vertical haft part 20 and the cutting edge 14 is 55°. Fig. 3 shows in dashed and dotted lines the level of the ground during the working of grassland 15a and arable land 15b. It can be seen clearly that in those two circumstances a large enough part of the cutting edge 14 remains above the ground 15.

Fig. 4 shows an alternative embodiment for the attachment of the cutter 9. For this purpose, the cutter 9 is guided vertically by way of a telescopic connection 21 with vertically directed bar 22 and bush 23 which telescope into one another. A helical spring 24 is fitted around the bar 22 and rests with its ends against bush 23 or the frame 3. For further reinforcement of the vertical guidance by the telescopic connection 21, a drawbar 25 is hingedly connected to the bush 23, which drawbar in respect of the vertical stroke of the cutter 9 is hingedly connected to the frame 3 at a great distance from the bush 23. Here again, a vertical stroke of the cutter is combined with an essentially invariable sloping position.

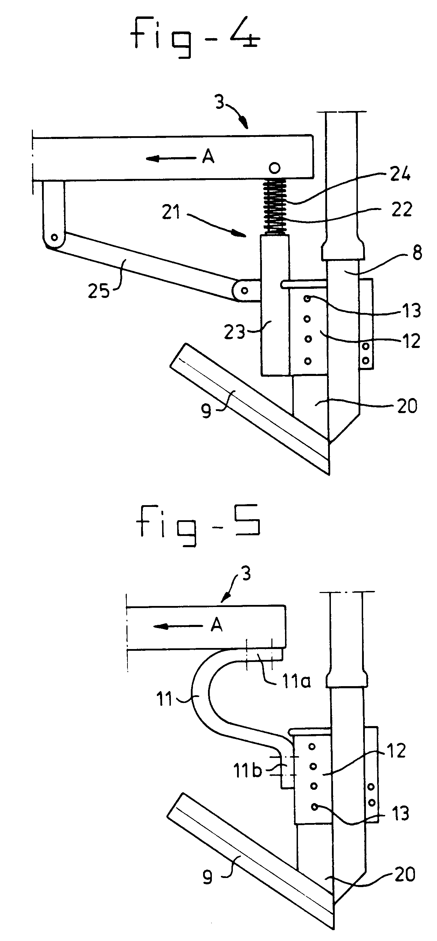

A further alternative of the suspension for the cutter 9 is shown in Fig. 5. For this, the cutter 9 is fixed by means of a leaf spring 11, the spring 11 being bent essentially in a U-shape. One leg 11a thereof is fixed to the frame 3, as shown. The other leg has an outward directed flange 11b which is bent essentially through 90°, and to which the cutter 9 is fixed in the manner shown. Although the effect is not as good as that of the embodiment shown in Fig. 2, here again a vertical stroke combined with a small horizontal stroke is permitted while the acute angle of inclination of the cutter 9 is retained.

The embodiment described and shown here can naturally be adapted. For instance, it is expected that the position of the part of the cutting edge 14 which is under the ground is less important for a good effect. That part could, for example, run vertically, so that the cutting edge 14 has a bend. Nor does the cutting edge 14 have to be straight, but it can, for example, describe a circular arc part, with the result that a wedge-shaped space is also formed with the ground. The acute angle between the haft part 20 and the cutting edge can also be selected differently. In that case the frame 3 will have to be set at an acute angle to the horizontal in order to form the optimum acute angle between the cutting edge 14 and the ground 15. What is important is the formation of a wedge-shaped space increasing in the direction of travel between the cutting edge 14 and the ground 15, preferably with an acute angle of 35°. The position of, for example, the delivery aperture 8 can also be selected freely, the use of a spring-loaded attachment of the cutter 9 is not absolutely essential, and the frame 3 can also be fixed without hinge point. Moreover, the cutter 9 can consist of a triangular plate with cutting edge.

In this way the invention provides a reliably operating soil fertilizing device which is cheap to manufacture and which with one type of cutter is suitable for efficiently working not only vegetation such as grassland, but also arable land.

## Claims

1. Soil fertilizing device, comprising working means for producing a furrow in the ground, and a nozzle which opens out close to the working means, which nozzle is in fluid communication with a tank for slurry, the working means each containing an essentially immovably fixed bar-shaped cutting element with cutting edge which is intended for partial insertion into the ground, which cutting element (9) is fixed in a spring-loaded manner, the cutting element (9) is positioned such that its cutting edge (14) is faced downwards and makes an acute angle with the horizontal, and the cutting element is mounted to the device at one of its longitudinal ends, **characterized in that** each cutting element is mounted at its backward end, viewed in the direction of forward movement of the device, and is fixed to the device through an upward extending haft part (20).

2. Device according to Claim 1, in which the places at which the spring element (11, 22) is in contact with the cutting element (9) or the remainder of the device (1), in relation to the usual direction of movement of the device (1), lie at a distance of at most essentially the longitudinal dimension of the cutting edge (14), viewed in the abovementioned direction of movement.

3. Device according to Claim 2, in which the abovementioned places on the spring element lie essentially vertically above one another.

4. Device according to Claim 2 or 3, in which the spring element (11) is a leaf spring curved into a loop shape, and its part connected to the cutting element runs essentially horizontally, while the part connected to the remainder of the device forms essentially an angle of approximately 60° with the horizontal.

5. Device according to Claim 4, in which the radius of curvature of the leaf spring (11) increases uniformly from the point of attachment to the cutting element (9).

6. Device according to one of the preceding claims, in which the cutting element (9) is guided so that it is forced essentially in a vertical direction.

7. Device according to one of the preceding claims, in which the acute angle is 5 to 65°, in particular 30° to 40°, and more particularly 35°.

8. Cutter for the device according to claim 1, in which said cutter comprises two bar-shaped or strip-shaped parts with their ends fixed to each other and sloping relative to each other, one of which is the cutting part and contains the cutting edge, while the other is the haft part and is provided with fixing means for fixing to the device characterized in that the cutting part (9) is fixed at its backward end, viewed in the direction of the intended forward movement of the cutter, to the haft part (20), and that the cutting part (9) and the haft part (20) enclose an acute angle.

9. Cutter according to Claim 8, in which said two parts form an angle of approximately 30° to 70°, in particular 50° to 60°, and more particularly 55°.

## Patentansprüche

1. Bodendüngevorrichtung mit Bearbeitungsmitteln zum Erzeugen einer Furche in dem Boden und einer Düse, die sich nahe zu den Bearbeitungsmitteln öffnet, wobei die Düse in einer Fluidverbindung mit einem Tank für eine Aufschleummung steht und jedes Bearbeitungsmittel ein im westenlichen unbewegliches, feststehendes, stabförmiges Schneidelement mit einer Schneidkante enthält, das zur teilweisen Einführung in den Boden vorgesehen ist, wobei das Schneidelement (9) in einer gefederten Weise befestigt ist, und das Schneidelement (9) derart angeordnet ist, daß seine Schneidkante (14) nach unten zeigt und einen spitzen Winkel mit der Horizontalen bildet und das Schneidelement mit einem seiner Längsenden an der Vorrichtung montiert ist, **dadurch gekennzeichnet**, daß jedes Schneidelement mit seinem rückwärtigen Ende, gesehen in der Richtung der Vorwärtsbewegung der Vorrichtung, montiert und mit der Vorrichtung durch ein sich aufwärts erstreckendes Heftteil (20) befestigt ist,

2. Vorrichtung nach Anspruch 1, bei der die Stellen, an denen das Federelement (11, 22) das Schneidelement (9) oder den Rest der Vorrichtung (1) in bezug auf die übliche Bewegungsrichtung der Vorrichtung (1) berührt, in einem Abstand liegen von höchstens im wesentlichen der Längsausdehnung der Schneidkante (14), gesehen in der oben erwähnten Richtung der Bewegung.

3. Vorrichtung nach Anspruch 2, bei der die oben erwähnten Stellen auf dem Federelement im wesentlichen vertikal übereinander liegen.

4. Vorrichtung nach Anspruch 2 oder 3, bei der das Federelement (11) eine in einer Schleife gebogene Blattfeder ist und ihr Teil, der mit dem Schneidelement verbunden ist, im wesentlichen horizontal verläuft, während der Teil, der mit dem Rest der Vorrichtung verbunden ist, im wesentlichen einen Winkel von ungefähr 60° mit der Horizontalen bildet.

5. Vorrichtung nach Anspruch 4, bei der der Krümmungsradius der Blattfeder (11) sich gleichförmig von dem Punkt der Befestigung mit dem Schneidelement (9) vergrößert.

6. Vorrichtung nach einem der vorhergehenden Ansprüche, bei der das Schneidelement (9) so geführt ist, daß es im wesentlichen in einer vertikalen Richtung gedrückt wird

7. Vorrichtung nach einem der vorhergehenden Ansprüche, bei der der spitze Winkel 5 bis 65°, speziell 30 bis 40° und spezieller 35° ist.

8. Schneide für die Vorrichtung nach Anspruch 1, bei der die Schneide umfaßt: zwei stabförmige oder bandförmige Teile, deren Enden aneinander befestigt sind und zueinander schräg stehen, wobei eines von beiden das Schneidteil ist und die Schneidkante enthält, während das andere ein Heftteil ist und mit Befestigungsmitteln zum Befestigen der Vorrichtung bereitgestellt wird, **dadurch gekennzeichnet**, daß das Schneidteil (9) an seinem rückwärtigen Ende, gesehen in der Richtung der vorgesehenen Vorwärtsbewegung der Schneide, mit dem Heftteil (20) befestigt ist und daß das Schneidteil (9) und das Heftteil (20) einen spitzen Winkel einschließen.

9. Schneide nach Anspruch 8, bei der die zwei Teile einen Winkel von ungefähr 30 bis 70°, speziell 50 bis 60° und spezieller 55° bilden.

## Revendications

1. Dispositif de fertilisation de sol, comprenant des moyens de travail pour produire un sillon dans la terre, et une buse qui s'ouvre près des moyens de travail, laquelle buse est en communication fluide avec un réservoir de boue liquide, les moyens de travail contenant chacun un élément de coupe en forme de barre fixe sensiblement immobile avec un bord de coupe qui est destiné à être inséré partiellement dans la terre, lequel élément de coupe (9) est fixé sous l'action d'un ressort, l'élément de coupe (9) est positionné de sorte que son bord de coupe (14) soit orienté vers le bas et fasse un angle aigu avec l'horizontale, et l'élément de coupe est monté sur le dispositif au niveau d'une de ses extrémités longitudinales, caractérisé en ce que chaque élément de coupe est monté au niveau de son extrémité arrière, quand on regarde dans le sens du déplacement vers l'avant du dispositif, et est fixé au dispositif par l'intermédiaire d'une partie formant manche s'étendant vers le haut (20).

2. Dispositif selon la revendication 1, dans lequel les emplacements au niveau desquels un élément formant ressort (11, 22) est en contact avec l'élément de coupe (9) ou avec le reste du dispositif (1), en relation au sens habituel du mouvement du dispositif (1), se trouvent à une certaine distance d'au plus sensiblement la dimension longitudinale du bord de coupe (14), quand on regarde dans le sens de mouvement précédemment mentionné.

3. Dispositif selon la revendication 2, dans lequel les emplacements précédemment mentionnés sur l'élément formant ressort se trouvent sensiblement à la verticale les uns au-dessus des autres.

4. Dispositif selon la revendication 2 ou 3, dans lequel l'élément formant ressort (11) est un ressort à lames incurvé en une forme de boucle, et sa partie reliée à l'élément de coupe s'étend sensiblement à l'horizontale, tandis que la partie reliée au reste du dispositif forme sensiblement un angle d'environ 60° avec l'horizontale.

5. Dispositif selon la revendication 4, dans lequel le rayon de courbure du ressort à lames (11) augmente de façon uniforme à partir du point de fixation jusqu'à l'élément de coupe (9).

6. Dispositif selon l'une quelconque des revendications précédentes, dans lequel l'élément de coupe (9) est guidé de sorte qu'il est forcé sensiblement dans la direction verticale.

7. Dispositif selon l'une quelconque des revendications précédentes, dans lequel l'angle aigu est compris entre 5° et 65°, particulièrement entre 30° et 40°, et est plus particulièrement de 35°.

8. Dispositif de coupe pour le dispositif selon la revendication 1, dans lequel ledit dispositif de coupe comprend deux parties en forme de barre ou en forme de bande, leurs extrémités étant fixées l'une par rapport à l'autre et en oblique l'une par rapport à l'autre, dont l'une est la partie de coupe et contient le bord de coupe, tandis que l'autre est la partie formant manche et est munie de moyens de fixation pour se fixer au dispositif, caractérisé en ce que la partie de coupe (9) est fixée au niveau de son extrémité arrière, quand on regarde dans le sens du mouvement projeté vers l'avant du dispositif de coupe, à la partie formant manche (20), et en ce que la partie de coupe (9) et la partie formant manche (20) forment un angle aigu.

9. Dispositif de coupe selon la revendication 8, dans lequel lesdites deux parties forment un angle d'environ 30° à 70°, en particulier de 50° à 60°, et plus particulièrement de 55°.
